# EUROPEAN PATENT APPLICATION

(11) **EP 4 686 273 A1**
(43) Date of publication of application: **28.01.2026**
(21) Application number: 23928000.1
(22) Date of filing: 21.03.2023
(51) Int. Cl.: H04W 52/48

(54) **POWER RAMPING DETERMINATION METHOD AND APPARATUS, AND COMMUNICATION DEVICE**

(71) Applicant: Beijing Xiaomi Mobile Software Co., Ltd., Beijing 100085 (CN)
(72) Inventor: QIAO, Xuemei, Beijing 100085 (CN)
(74) Representative: Zimmermann, Tankred Klaus
(86) International application number: PCT/CN2023/082896
(87) International publication number: WO 2024/192685

(57) **Abstract**

Embodiments of the present disclosure relate to the technical field of mobile communications, and provide a power ramping determination method and apparatus, and a communication device. For multiple physical random access channel (PRACH) transmissions in a random access channel (RACH) attempt, on the basis of configuration information of a network device or on the basis of a protocol agreement, a user equipment determines whether to perform power ramping. Provided is a power ramping mechanism under multiple PRACH transmissions, which determines a terminal behavior while ensuring PRACH coverage.

## Description

### TECHNICAL FIELD

The disclosure relates to the field of mobile communication technology, in particular to a power ramping determination method, a power ramping determination apparatus and a communication device.

### BACKGROUND

In 3rd Generation Partnership Project (3GPP) Release 15 (R15), a single random access channel (RACH) attempt transmits the physical random access channel (PRACH) transmission only once. For PRACH retransmission, a power ramping mechanism is introduced, where each retransmission increases the PRACH transmission power by one step, specifying the conditions under which a user equipment (UE) performs power ramping.

In R18 CE WI**,** introducing a multiple PRACH transmissions mechanism for a single RACH attempt is considered. Techniques such as non-correlated merging can enhance detection success probability and improve PRACH coverage. However, in scenarios where multiple PRACH transmissions are introduced, it remains unclear how the UE supports the power ramping mechanism in the RACH attempt.

### SUMMARY

The disclosure provides a power ramping determination method, a power ramping determination apparatus and a communication device, and proposes a power ramping mechanism for a plurality of PRACH transmissions, which clarifies the behavior of the UE while ensuring the PRACH coverage.

According to a first aspect of embodiments of the disclosure, a power ramping determination method is provided. The method is performed by a UE, and includes: for a plurality of PRACH transmissions within one RACH attempt, determining whether to perform power ramping based on configuration information of a network device or based on a protocol.

According to a second aspect of embodiments of the disclosure, a power ramping determination method is provided. The method is performed by a network device, and includes: sending configuration information to a UE, in which the configuration information carries information indicating whether the UE performs the power ramping or not.

According to a third aspect of embodiments of the disclosure, a UE is provided. The UE includes: a determining module, configured to, for a plurality of PRACH transmissions within one RACH attempt, determine whether to perform power ramping based on configuration information of a network device or based on a protocol.

According to a fourth aspect of embodiments of the disclosure, a network device is provided. The network device includes: a sending module, configured to send configuration information to a UE, in which the configuration information carries information indicating whether the UE performs the power ramping or not.

According to a fifth aspect of embodiments of the disclosure, a communication device is provided. The communication device includes: a transceiver, a memory, and a processor connected to the transceiver and the memory, respectively. The processor is configured to control the transceiver to receive and transmit wireless signals by executing computer-executable instructions on the memory, and is capable of implementing the method of the embodiments of the first aspect of the disclosure or the method of the embodiments of the second aspect of the disclosure.

According to a sixth aspect of embodiments of the disclosure, a computer storage medium is provided. The computer storage medium stores computer executable instructions, when executed by a processor, the computer executable instructions are capable of implementing the method of the embodiments of the first aspect of the disclosure or the method of the embodiments of the second aspect of the disclosure.

According to a seventh aspect of embodiments of the disclosure, a communication system is provided. The communication system includes: a UE and a network device. The UE is used to implement the method of the embodiments of the first aspect of the disclosure, and the network device is used to implement the method of the embodiments of the second aspect of the disclosure.

According to the power ramping determination method of the disclosure, for a plurality of PRACH transmissions within one RACH attempt, the UE determines whether to perform the power ramping based on the configuration information of the network device or based on the protocol. The disclosure proposes a power ramping mechanism for the plurality of PRACH transmissions, which clarifies a behavior of the UE while ensuring the coverage of PRACH.

Additional aspects and advantages of the embodiments of the disclosure will be given in part in the following descriptions, become apparent in part from the following descriptions, or be learned from the practice of the disclosure.

### BRIEF DESCRIPTION OF THE DRAWINGS

The above and/or additional aspects and advantages of the disclosure will become apparent and readily understood from the following descriptions of the embodiments in combination with the accompanying drawings, in which:
FIG. 1 is a schematic flowchart of a power ramping determination method according to an embodiment of the disclosure.
FIG. 2 is a schematic flowchart of a power ramping determination method according to an embodiment of the disclosure.
FIG. 3 is a schematic flowchart of a power ramping determination method according to an embodiment of the disclosure.
FIG. 4 is a schematic flowchart of a power ramping determination method according to an embodiment of the disclosure.
FIG. 5 is an interactive schematic diagram of a power ramping determination method according to an embodiment of the disclosure.
FIG. 6 is a schematic block diagram of a power ramping determination apparatus according to an embodiment of the disclosure.
FIG. 7 is a schematic block diagram of a power ramping determination apparatus according to an embodiment of the disclosure.
FIG. 8 is a schematic block diagram of a power ramping determination apparatus according to an embodiment of the disclosure.
FIG. 9 is a schematic structural diagram of a communication device according to an embodiment of the disclosure.
FIG. 10 is a schematic structural diagram of a chip provided by an embodiment of the disclosure.

### DETAILED DESCRIPTION

Embodiments of the disclosure are described in detail below, examples of which are shown in the accompanying drawings, in which the same or similar reference numbers throughout represent the same or similar elements or elements having the same or similar functions. The embodiments described below with reference to the accompanying drawings are exemplary and are intended to explain the disclosure, which shall not be construed as limiting the disclosure.

In order to enhance PRACH coverage, in R18 CE WI, introducing a multiple PRACH transmissions mechanism for a single RACH attempt is considered. This approach increases the probability of detection success through techniques such as non-correlated merging. In contrast, R15 specifies that only one PRACH is transmitted per RACH attempt.

Regarding a power allocation priority for a plurality of uplink (UL) channels under a carrier aggregation (CA) scenario, R15 made the following conclusions.

In a case where a component carrier (CC)/UL configured for the UE are transmitted at the same time on a physical uplink shared channel (PUSCH)/physical uplink control channel (PUCCH) for the same transmission duration, and that different CCs and ULs of one or two PUCCH groups share the same numerology and exhibit overlapping transmission, when the power of the UE is constrained due to simultaneous transmissions across multiple serving cells, the power allocation priority is: PRACH transmission in a primary cell (PCell)> acknowledgement/negative acknowledgement (ACK/NACK) transmission and/or scheduling request (SR) transmission on a PUCCH or a PUSCH > uplink control information (UCI) transmission on a PUCCH or a PUSCH > UCI transmission on/off a PUSCH > sounding reference signal (SRS)/PRACH transmission in a secondary cell (SCell).

1. In the same priority level, PCell has a higher priority than SCell.

2. To prevent the transmission power from exceeding a Pcmax, power reduction or transmission cancellation is first applied to the lowest priority and then to the second lowest priority and so on until an aggregate power is less than or equal to the Pcmax. Specifically, the power reduction or transmission cancellation is implemented by the UE.

Therefore, if a sum of UL transmission powers of all CCs within a slot exceeds the maximum transmission power of the UE, the UE performs power allocation according to the above priority, to ensure channel transmissions with higher priorities. For channel transmissions with lower priorities, whether to perform channel transmissions with a reduced transmission power or cancel these channel transmissions is determined by the UE.

In R15, the power ramping mechanism is introduced for PRACH retransmissions. With each additional retransmission, a PRACH transmission power will increase by one step. If any of the following three conditions occurs, a power ramping counter will not increase its counting number by 1:
1. a synchronization and physical broadcast channel (PBCH) block (SSB) index used for RACH occasion (RO) selection has changed;
2. a space filter for a UL transmission has changed; and
3. a transmission power for the current PRACH transmission has reduced or the current transmission is cancelled due to the power allocation.

Therefore, according to the power allocation priority of channels in R15, it can be determined that, for a PRACH transmission with the lowest channel priority, the transmission power may be reduced or the transmission may be cancelled. For such situation, R15 specifies that the power ramping counter of the UE will pause its increment by 1. That is, if the transmission power for the current transmission is reduced or the current transmission is cancelled, the power ramping will not be performed for the next PRACH retransmission.

However, the R18 CE WI has introduced the power ramping mechanism for a plurality of PRACH transmissions. When the transmission power of one or more PRACH transmissions among the plurality of PRACH transmissions is reduced and/or the one or more PRACH transmissions is cancelled, it remains unclear how the UE performs the power ramping in subsequent RACH attempt.

Therefore, the disclosure provides a power ramping determination method, a power ramping determination apparatus and a communication device, and proposes a power ramping mechanism for a plurality of PRACH transmissions, which clarifies how the UE performs the power ramping when power allocation causes a transmission power reduction of one or more PRACH transmissions and/or a cancellation of one or more PRACH transmissions among the plurality of PRACH transmissions.

It is understood that the solution provided by the disclosure can be applied to the Fifth Generation (5G) and its future communication technologies, such as 5G-advanced and Sixth Generation (6G), which is not limited in the disclosure.

In the following, the power ramping determination solution provided by the disclosure will be introduced in detail in combination with the accompanying drawings.

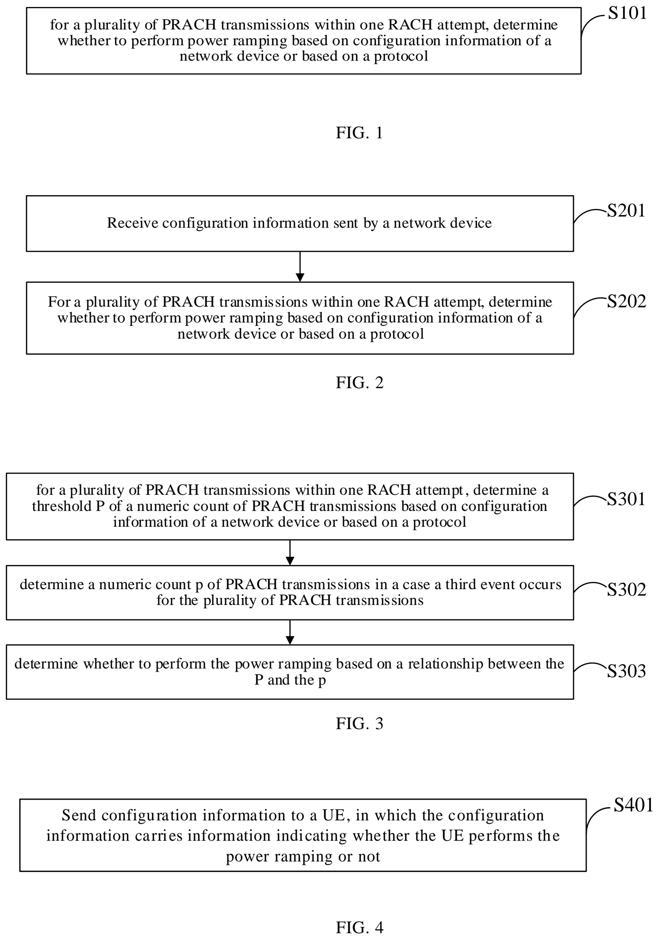

FIG. 1 is a schematic flowchart of a power ramping determination method according to an embodiment of the disclosure. As illustrated in FIG. 1, the method is performed by a UE. In the embodiments of the disclosure, the UE includes, but is not limited to a smart UE, a cellular phone, a wireless device, a handset, a mobile unit, a vehicle and a vehicle-mounted device, which is not limited in the disclosure.

The method includes the following steps.

At step S101, for a plurality of PRACH transmissions within one RACH attempt, it is determined whether to perform power ramping based on configuration information of a network device or based on a protocol.

In the embodiments of the disclosure, the network device includes, but is not limited to, a switch, a router, a bridge, a hub, a gateway, a network interface card (NIC), a wireless access point (WAP) and a base station, which is not limited in the disclosure.

It is understandable that in a scenario where R18 CE WI has proposed to perform a plurality of PRACH transmissions within one RACH attempt, in the above plurality of PRACH transmissions, PRACH retransmission may be initiated because the UE does not receive a random access response (RAP), or the UE does not receive its corresponding RAP ID, or the UE fails in contention resolution. If the power ramping mechanism is introduced at this time, the behavior of the UE needs to be clarified. That is, it is necessary to determine under what conditions the UE performs or does not perform the power ramping.

In the embodiments of the disclosure, the UE can determine whether to perform the power ramping based on the configuration information or indication information of the network device. For example, when the UE receives the configuration information or indication information of the network device, which indicates the UE to perform the power ramping in PRACH retransmission, the UE performs the power ramping, i.e., the counting number of the power ramping counter will be increased by one, and the transmission power of the PRACH will be increased by one step. The UE may also determine whether to perform the power ramping based on the protocol. For example, if the protocol specifies that during 8 PRACH transmissions, even if transmission power is reduced or transmission is canceled in 3 PRACH transmissions due to power allocation, the power ramping still be performed, i.e., the counting number of the power ramping counter shall still be increased by one.

It should be noted that the solution of the disclosure can be applied to contention-free random access (CFRA) or contention-based random access (CBRA), which is not limited in the disclosure.

In conclusion, according to the power ramping determination method of the disclosure, for the plurality of PRACH transmissions within one RACH attempt, the UE determines whether to perform the power ramping based on the configuration information of the network device or based on the protocol. The disclosure proposes a power ramping mechanism for a plurality of PRACH transmissions, which clarifies the behavior of the UE while ensuring the PRACH coverage.

FIG. 2 is a schematic flowchart of a power ramping determination method according to an embodiment of the disclosure. The method is performed by a UE. Based on the embodiment of FIG. 1, as illustrated in FIG. 2, the method includes the following steps.

At step S201, configuration information sent by a network device is received.

The configuration information carries information indicating whether the UE performs the power ramping or not.

The configuration information may be carried in a radio resource control (RRC) signaling or a field of downlink control information (DCI). For example, it may be configured directly in the RRC signaling or it can be carried in the field of DCI as some dynamic indications.

The configuration information may be implicit or explicit. If the configuration information is explicit, for example, when indication information in the configuration information sent by the network device is 1, it indicates the UE to perform the power ramping, and if the indication information is 0, it indicates the UE not to perform the power ramping. If the configuration information is implicit, for example, if the configuration information is not received, or the configuration information does not carry information indicating the UE to perform the power ramping, it is determined that the power ramping will not be performed.

At step S202, for a plurality of PRACH transmissions within one RACH attempt, it is determined whether to perform power ramping based on configuration information of a network device or based on a protocol.

In some embodiments of the disclosure, determining whether to perform the power ramping based on the configuration information of the network device includes: in response to receiving the configuration information or in response to receiving the configuration information carrying information indicating the UE to perform the power ramping, determining to perform the power ramping; or in response to not receiving the configuration information or in response to receiving the configuration information carrying information indicating the UE not to perform the power ramping, determining not to perform the power ramping.

The configuration information sent to the UE by the network device may directly carry dedicated configuration information indicating whether the UE performs the power ramping or not, or it may be other configuration information sent by the network device, which can be reused to implicitly indicate whether the UE performs the power ramping or not. That is, when the PRACH retransmission is initiated, if the UE receives the configuration information from the network device or the received configuration information carries information indicating the UE to perform the power ramping, the UE determines to perform the power ramping. If the UE does not receive the configuration information from the network device or the received configuration information does not carry information indicating the UE to perform the power ramping, the UE determines not to perform the power ramping.

It is understood that in R15, there is only one PRACH transmission within one RACH attempt. If the transmission power of the PRACH transmission is reduced or the PRACH transmission is cancelled due to power allocation, it is determined not to perform the power ramping when initiating the PRACH retransmission.

In scenarios where R18 CE WI considers introducing a plurality of PRACH transmissions within one RACH attempt, power allocation may cause reduced transmission power of one or more PRACH transmissions and/or a cancellation of one or more PRACH transmissions among the plurality of PRACH transmissions, the solution in this embodiment can be adopted. Based on the configuration information or indication from the network device, it can be determined whether to perform the power ramping when a certain PRACH transmission is cancelled or its transmission power is reduced.

In an embodiment of the disclosure, the configuration information sent by the network device may also carry a threshold P of a numeric count of PRACH transmissions. It should be understood that in some optional implementations, the threshold P may be carried by other messages, which is not limited in the disclosure.

The threshold P of the numeric count of PRACH transmissions includes: a threshold Q of a numeric count of reducing the transmission power and/or a threshold K of a numeric count of cancelling the PRACH transmission. The UE may make a decision on whether to perform the power ramping in the next RACH attempt based on Q and/or K configured by the network device. For example, when a numeric count of cancelling the PRACH transmission exceeds K, the power ramping will not be performed for the next RACH attempt, that is, the power ramping counter pauses its increment by 1.

In some embodiments of the disclosure, determining whether to perform the power ramping based on the protocol, includes: in a case that a first event agreed in the protocol occurs, determining to perform the power ramping.

The first event is: for the plurality of PRACH transmissions, less than or equal to m PRACH transmissions are reduced in transmission power or cancelled due to a power allocation, m is less than a numeric count n of transmissions for the plurality of PRACH transmissions determined by the UE, and m is agreed in the protocol.

For example, if there are four PRACH transmissions within one RACH attempt, the numeric count n of transmissions for the four PRACH transmissions is 8. For the numeric count n of transmissions for the four PRACH transmissions, less than or equal to m PRACH transmissions are reduced in transmission power or cancelled due to a power allocation (including 1, 2, 3, ... m PRACH transmissions), m is less than the n, i.e., 8. That is, when 1<m<8, the first event agreed in the protocol occurs, and it is determined to perform the power ramping during the PRACH retransmission, that is, the counting number of the power ramping counter is increased by 1.

In an optional embodiment of the disclosure, the method further includes: receiving a candidate numeric count of transmissions for the plurality of PRACH transmissions sent by the network device; and determining n based on the candidate numeric count of transmissions.

In detail, a set of data configured by the network device for the UE includes a plurality of candidate numeric counts of transmissions. By comparing a measured reference signal received power with several thresholds, the UE may determine the n. For example, the data includes 2, 4 and 8, and the measured reference signal received power is within a third threshold interval, so that it is determined that n is 8.

It should be noted that, in some implementations, the UE may further determine whether the first event agreed in the protocol occurs after determining to perform the power ramping based on the configuration information of the network device. If the first event agreed in the protocol occurs, the UE determines to perform the power ramping. Or, if the UE does not receive the configuration information sent by the network device, it needs to determine whether the first event agreed in the protocol occurs, and if the first event agreed in the protocol occurs, the UE determines to perform the power ramping.

In some embodiments of the disclosure, determining whether to perform the power ramping based on the protocol, includes: in a case that a second event agreed in the protocol occurs, determining not to perform the power ramping.

The second event is: for the plurality of PRACH transmissions, at least one PRACH transmission is reduced in transmission power or cancelled due to the power allocation.

For example, if the numeric count of transmissions for the plurality of PRACH transmissions is n, and the numeric count of transmissions that are either transmission power reduced or cancelled due to the power allocation is m, then when 1≤m≤n, it is determined that the power ramping will not be performed, meaning the power ramping counter will pause incrementing by 1.

It should be noted that, in some implementations, the UE may further determine whether the second event agreed by the protocol occurs after determining not to perform the power ramping based on the configuration information from the network device, and determine not to perform the power ramping if the second event agreed by the protocol occurs. Or the UE may determine whether the second event agreed by the protocol occurs if it does not receive the configuration information sent by the network device, and determines not to perform the power ramping if the second event agreed by the protocol occurs.

In conclusion, according to the power ramping determination method of the disclosure, for the plurality of PRACH transmissions within one RACH attempt, when the transmission power of one or more PRACH transmissions are reduced and/or one or more PRACH transmissions are cancelled, it clarifies how the UE performs the power ramping in subsequent RACH attempts.

FIG. 3 is a schematic flowchart of a power ramping determination method according to an embodiment of the disclosure. The method is performed by a UE. Based on the embodiment in FIG. 1 and/or the embodiment in FIG. 2, as illustrated in FIG. 3, the method includes the following steps.

At step S301, for a plurality of PRACH transmissions within one RACH attempt, a threshold P of a numeric count of PRACH transmissions is determined based on configuration information of a network device or based on a protocol.

In the embodiments of the disclosure, the UE may determine the threshold P of the numeric count of PRACH transmissions based on the configuration information from the network device. P may be sent by the network device independently, or P may be carried in the configuration information sent by the network device and sent together with the information indicating whether the UE performs power ramping or not. The UE may also determine the threshold P of the numeric count of PRACH transmissions based on the protocol, which is not limited by the disclosure.

P may be a fixed value, or P=N/2, P=N-offset, offset=1/2/N/N-1, which is not limited in the disclosure.

At step S302, a numeric count p of PRACH transmissions in a case a third event occurs for the plurality of PRACH transmissions is determined.

The third event is a transmission power of a PRACH transmission is reduced or a PRACH transmission is cancelled due to a power allocation.

At step S303, it is determined whether to perform the power ramping based on a relationship between P and p.

That is, in a case that a transmission power of a PRACH transmission is reduced or a PRACH transmission is cancelled due to a power allocation, the UE may determine whether to perform the power ramping by comparing the threshold P of the numeric count of PRACH transmissions with the numeric count p of PRACH transmissions in a case a transmission power of a PRACH transmission is reduced or a PRACH transmission is cancelled due to a power allocation.

In some embodiments, an optional implementation of step S303 includes: in a case p ≤P, determining to perform the power ramping; or in a case p> P, determining not to perform the power ramping.

That is, when there are less than or equal to P PRACH transmissions are reduced in transmission power or cancelled due to a power allocation, it is determined to perform the power ramping, and the counting number of the power ramping counter is increased by 1. If there are more than P PRACH transmissions are reduced in transmission power or cancelled due to a power allocation, it is determined not to perform the power ramping, and the power ramping counter pauses its increment by 1.

In some embodiments, P includes a threshold Q of a numeric count of reducing the transmission power and a threshold K of a numeric count of cancelling the PRACH transmission, and p includes a numeric count q of PRACH transmissions with reduced transmission powers due to the power allocation for the plurality of PRACH transmissions and a numeric count k of PRACH transmissions cancelled due to the power allocation for the plurality of PRACH transmissions, an optional implementation of step S303 includes: in a case k≤K and q≤Q, determining to perform the power ramping; or in a case k>K or q>Q, determining not to perform the power ramping, an optional implementation of step S303 includes: in a case k≤K and q≤Q, determining to perform the power ramping; or in a case k>K or q>Q, determining not to perform the power ramping.

That is, the optional implementation separates two scenarios of PRACH transmission power reduction and PRACH transmissions cancellation, and determines whether to perform the power ramping based on two thresholds: Q and K. In a case q≤Q and k≤K, it is determined to perform the power ramping, and the counting number of the power ramping counter is increased by 1. In a case k>K or q>Q, it is determined not to perform the power ramping, and the power ramping counter pauses its increment by 1.

In some embodiments, when P includes the threshold Q of a numeric count of reducing the transmission power and the threshold K of a numeric count of cancelling the PRACH transmission, and p includes the numeric count q of PRACH transmissions with reduced transmission power due to the power allocation for the plurality of PRACH transmissions and the numeric count k of PRACH transmissions cancelled due to power allocation for the plurality of PRACH transmissions, another optional implementation of step S303 includes: in a case p≤P, q ≤Q and k≤K, determining to perform the power ramping; or in a case any one of p>P, q>Q and k>K is satisfied, determining not to perform the power ramping.

That is, this embodiment determines whether to perform the power ramping based on three thresholds including P, Q and K. In a case q≤Q, and k≤K, and p=q+k≤P, it is determined to perform the power ramping, and the counting number of the power ramping counter is increased by 1. Otherwise, when any one of p>P, q>Q and k>K is satisfied, it is determined not to perform the power ramping, and the power ramping counter pauses its increment by 1.

It should be noted that the embodiments of the disclosure can be implemented independently or in combination with the embodiment shown in FIG. 2. For example, after determining to perform the power ramping based on the configuration information of the network device, the UE needs to further determine whether to perform the power ramping based on the relationship between p and P, which is not limited in the disclosure.

In conclusion, according to the power ramping determination method of the disclosure, it clear that the UE determines P based on the configuration information of the network device or based on the protocol and then determine p, so as to determine whether to perform the power ramping based on the relationship between p and P.

FIG. 4 is a schematic flowchart of a power ramping determination method according to an embodiment of the disclosure. The method is performed by a network device. As illustrated in FIG. 4, the method includes the following steps. In the embodiments of the disclosure, the network device includes, but is not limited to, a switch, a router, a bridge, a hub, a gateway, a NIC, a WAP and a base station, which is not limited in the disclosure.

At step S401, configuration information is sent to a UE.

The configuration information carries information indicating whether the UE performs the power ramping or not.

In the embodiments of the disclosure, the UE includes, but is not limited to a smart UE, a cellular phone, a wireless device, a handset, a mobile unit, a vehicle and a vehicle-mounted device, which is not limited in the disclosure.

In the embodiments of the disclosure, the configuration information may be carried in an RRC signaling or a field of DCI. For example, it may be configured directly in the RRC signaling or it can be carried in the field of DCI as some dynamic indications.

In detail, corresponding to the embodiment in FIG. 2, for a plurality of PRACH transmissions within one RACH attempt, the network device sends the configuration information to the UE, so that the UE can determine whether to perform the power ramping based on the configuration information of the network device.

The configuration information may be implicit or explicit. If the configuration information is explicit, for example, when indication information in the configuration information sent by the network device is 1, it indicates the UE to perform the power ramping, and if the indication information is 0, it indicates the UE not to perform the power ramping. If the configuration information is implicit, for example, if the configuration information is not received, or the configuration information carries information indicating the UE not to perform the power ramping, it is determined that the power ramping will not be performed.

In an embodiment of the disclosure, the configuration information sent by the network device may carry a threshold P of a numeric count of PRACH transmissions, or P is sent to the UE by the network device independently. Correspondingly, in the embodiment in FIG. 3, the UE may determine P by receiving the configuration information sent by the network device.

In some embodiments, the method further includes: sending a candidate numeric count of transmissions for the plurality of PRACH transmissions.

The candidate numeric count of transmissions are used for assisting the UE in determining the n.

In detail, corresponding to the embodiment in FIG. 2, the network device sends a plurality of candidate numeric counts of transmissions for the plurality of PRACH transmissions to the UE, the UE receives the plurality of candidate numeric counts of transmissions for the plurality of PRACH transmissions sent by the network device, and determines n based on the plurality of candidate numeric counts of transmissions.

In conclusion, according to the power ramping determination method of the disclosure, the network device sends the configuration information to the UE, in which the configuration information carries information indicating whether the UE performs the power ramping or not, so that he UE can determine whether to perform the power ramping based on the configuration information, which proposes a power ramping mechanism for a plurality of PRACH transmissions.

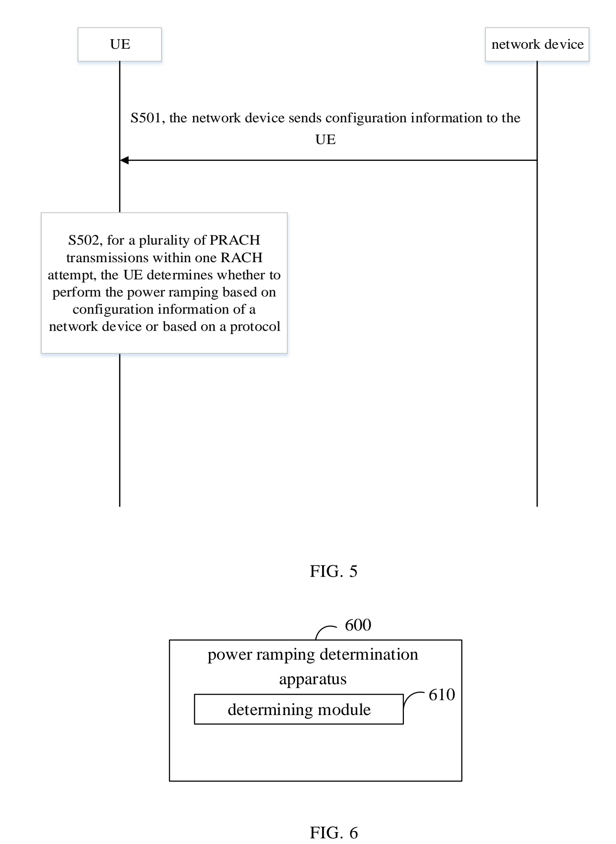

FIG. 5 is an interactive schematic diagram of a power ramping determination method according to an embodiment of the disclosure. As illustrated in FIG. 5, this embodiment relates to data/signaling interaction between a network device and a UE in the process of executing the power ramping determination method. Based on the embodiments in FIGs. 1-4, the method includes the following steps.

At step S501, the network device sends configuration information to the UE.

The configuration information carries information indicating whether the UE performs the power ramping or not.

At step S502, for a plurality of PRACH transmissions within one RACH attempt, the UE determines whether to perform the power ramping based on configuration information of a network device or based on a protocol.

In an embodiment of the disclosure, determining whether to perform the power ramping based on the configuration information of the network device, includes: in response to receiving the configuration information or in response to receiving the configuration information carrying information indicating the UE to perform the power ramping, determining to perform the power ramping; or in response to not receiving the configuration information or in response to receiving the configuration information carrying information indicating the UE not to perform the power ramping, determining not to perform the power ramping.

In an embodiment of the disclosure, determining whether to perform the power ramping based on the protocol, includes: in a case that a first event agreed in the protocol occurs, determining to perform the power ramping; in which the first event is: for the plurality of PRACH transmissions, less than or equal to m PRACH transmissions are reduced in transmission power or cancelled due to a power allocation, m is less than a numeric count n of transmissions for the plurality of PRACH transmissions determined by the UE, and m is agreed in the protocol.

In an embodiment of the disclosure, in the above method, the network device sends a plurality of candidate numeric counts of transmissions for the plurality of PRACH transmissions to the UE, the UE receives the candidate numeric counts of transmissions for the plurality of PRACH transmissions sent by the network device and determines n based on the candidate numeric counts of transmissions.

In an embodiment of the disclosure, determining whether to perform the power ramping based on the protocol, includes: in a case that a second event agreed in the protocol occurs, determining not to perform the power ramping, in which the second event is: for the plurality of PRACH transmissions, at least one PRACH transmission is reduced in transmission power or cancelled due to the power allocation.

In an embodiment of the disclosure, determining whether to perform the power ramping based on the configuration information of the network device or based on the protocol, includes: determining a threshold P of a numeric count of PRACH transmissions based on the configuration information of the network device or based on the protocol; determining a numeric count p of PRACH transmissions in a case a third event occurs for the plurality of PRACH transmissions; determining whether to perform the power ramping based on a relationship between P and p; in which the third event is a transmission power of a PRACH transmission is reduced or a PRACH transmission is cancelled due to a power allocation.

In an embodiment of the disclosure, in the above method, the network device sends the threshold P of the numeric count of PRACH transmissions to the UE.

In an embodiment of the disclosure, determining whether to perform the power ramping based on the relationship between P and p, includes: in a case p≤P, determining to perform the power ramping; or in a case p> P, determining not to perform the power ramping.

In an embodiment of the disclosure, P includes a threshold Q of a numeric count of reducing the transmission power and a threshold K of a numeric count of cancelling the PRACH transmission, p includes a numeric count q of PRACH transmissions with reduced transmission powers due to the power allocation for the plurality of PRACH transmissions and a numeric count k of PRACH transmissions cancelled due to the power allocation for the plurality of PRACH transmissions, and determining whether to perform the power ramping based on the relationship between p and P, includes: in a case k≤K and q≤Q, determining to perform the power ramping; or in a case k >K or q >Q, determining not to perform the power ramping.

In an embodiment of the disclosure, P includes the threshold Q a numeric count of reducing the transmission power and the threshold K of a numeric count of cancelling the PRACH transmission, and p includes the numeric count q of PRACH transmissions with reduced transmission power due to the power allocation for the plurality of PRACH transmissions and the numeric count k of PRACH transmissions cancelled due to power allocation for the plurality of PRACH transmissions, and determining whether to perform the power ramping based on the relationship between p and P, includes: in a case p≤P, q≤Q and k≤K, determining to perform the power ramping; or in a case any one of p>P, q>Q and k>K is satisfied, determining not to perform the power ramping.

It should be understood that the above step S501 is an optional step. In some embodiments, the UE may determine whether to perform the power ramping only based on the protocol. At this time, the network device does not need to send the configuration information to the UE.

The principle of the above embodiment is the same as that of the embodiments described in FIGs. 1-4, and the related description can refer to FIGs. 1-4, and details will not be repeated here.

In conclusion, according to the power ramping determination method provided by the embodiments of the disclosure, for a plurality of PRACH transmissions within one RACH attempt, the UE determines whether to perform the power ramping based on the configuration information of the network device or based on the protocol. The disclosure proposes a power ramping mechanism for the plurality of PRACH transmissions, which clarifies the behavior of the UE while ensuring the PRACH coverage.

In the above embodiments provided by the disclosure, the methods provided by the embodiments of the disclosure are introduced from the perspectives of the network device and the UE, respectively. In order to realize the functions in the methods provided by the embodiments of the disclosure, the network device and the UE may include a hardware structure and a software module, and the above functions are realized in the form of the hardware structure, the software module, or a combination of the hardware structure and the software module. A certain function of the above functions may be implemented in the hardware structure, the software module, or a combination of the hardware structure and the software module.

Corresponding to the power ramping determination method provided in the above embodiment, the disclosure also provides a power ramping determination apparatus. Since the power ramping determination apparatus provided in the embodiments of the disclosure corresponds to the power ramping determination method provided in the above embodiments, the implementations of the power ramping determination method are also applicable to the power ramping determination apparatus provided in the embodiments, which will not be described in detail in this embodiment.

FIG. 6 is a schematic block diagram of a power ramping determination apparatus 600 according to an embodiment of the disclosure. The apparatus 600 can be configured in a UE.

As illustrated in FIG. 6, the apparatus 600 includes: a determining module 610, configured to, for a plurality of PRACH transmissions within one RACH attempt, determine whether to perform power ramping based on configuration information of a network device or based on a protocol.

With the power ramping determination apparatus provided by the embodiments of the disclosure, for a plurality of PRACH transmissions within one RACH attempt, it determines whether to perform the power ramping based on the configuration information of the network device or based on the protocol, which clarifies the behavior of the UE while ensuring the PRACH coverage.

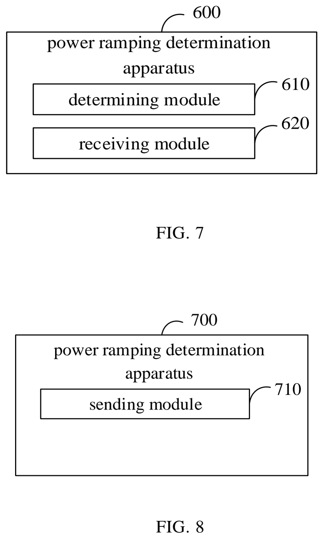

In some embodiments, as illustrated in FIG. 7, the apparatus 600 further includes: a receiving module 620, configured to receive the configuration information sent by the network device, in which the configuration information carries information indicating whether the UE performs the power ramping or not.

In some embodiments, the determining module 610 is further configured to: in response to receiving the configuration information or in response to receiving the configuration information carrying information indicating the UE to perform the power ramping, determine to perform the power ramping; or in response to not receiving the configuration information or in response to the configuration information does not carry information indicating the UE to perform the power ramping, determine not to perform the power ramping.

In some embodiments, the determining module 610 is further configured to: in a case that a first event agreed in the protocol occurs, determine to perform the power ramping, in which the first event is: for the plurality of PRACH transmissions, less than or equal to m PRACH transmissions are reduced in transmission power or cancelled due to a power allocation, m is less than a numeric count n of transmissions for the plurality of PRACH transmissions determined by the UE, and m is agreed in the protocol.

In some embodiments, the receiving module 620 is further configured to: receive a plurality of candidate numeric counts of transmissions for the plurality of PRACH transmissions sent by the network device; and determine n based on the plurality of candidate numeric counts of transmissions.

In some embodiments, the determining module 610 is further configured to: in a case that a second event agreed in the protocol occurs, determine not to perform the power ramping, in which the second event is: for the plurality of PRACH transmissions, at least one PRACH transmission is reduced in transmission power or cancelled due to the power allocation.

In some embodiments, the determining module 610 is further configured to: determine a threshold P of a numeric count of PRACH transmissions based on the configuration information of the network device or based on the protocol; determine a numeric count p of PRACH transmissions in a case a third event occurs for the plurality of PRACH transmissions; determine whether to perform the power ramping based on a relationship between P and the p; in which the third event is a transmission power of a PRACH transmission is reduced or a PRACH transmission is cancelled due to a power allocation.

In some embodiments of the disclosure, determining whether to perform the power ramping based on the relationship between P and p, includes: in a case p≤P, determining to perform the power ramping; or in a case p> P, determining not to perform the power ramping.

In some embodiments, P includes a threshold Q of a numeric count of reducing the transmission power and a threshold K of a numeric count of cancelling the PRACH transmission, and p includes a numeric count q of PRACH transmissions with reduced transmission powers due to the power allocation for the plurality of PRACH transmissions and a numeric count k of PRACH transmissions cancelled due to the power allocation for the plurality of PRACH transmissions, and determining whether to perform the power ramping based on the relationship between p and P, includes: in a case k≤K and q≤Q, determining to perform the power ramping; or in a case k >K or q >Q, determining not to perform the power ramping.

In some embodiments, P includes a threshold Q of a numeric count of reducing the transmission power and a threshold K of a numeric count of cancelling the PRACH transmission, and p includes the numeric count q of PRACH transmissions with reduced transmission power due to the power allocation for the plurality of PRACH transmissions and the numeric count k of PRACH transmissions cancelled due to power allocation for the plurality of PRACH transmissions, and determining whether to perform the power ramping based on the relationship between p and P, includes: in a case p≤P, q≤Q and k≤K, determining to perform the power ramping; or in a case any one of p>P, q>Q and k>K is satisfied, determining not to perform the power ramping.

In conclusion, according to the power ramping determination apparatus of the disclosure, for the plurality of PRACH transmissions within one RACH attempt, the UE determines whether to perform the power ramping based on the configuration information of the network device or based on the protocol, it clarifies how the UE performs the power ramping when power allocation causes a transmission power reduction of one or more PRACH transmissions and/or a cancellation of one or more PRACH transmissions among the plurality of PRACH transmissions.

FIG. 8 is a schematic block diagram of a power ramping determination apparatus 700 according to an embodiment of the disclosure. The apparatus 700 is configured in a network device.

As illustrated in FIG. 8, the apparatus 700 includes: a sending module 710, configured to send configuration information to a UE, in which the configuration information carries information indicating whether the UE performs the power ramping or not.

According to the power ramping determination apparatus of the disclosure, the apparatus sends the configuration information to the UE, in which the configuration information carries information indicating whether the UE performs the power ramping or not. Therefore, for a plurality of PRACH transmissions within one RACH attempt, the UE can determine whether to perform the power ramping based on the configuration information of the network device, which clarifies the behavior of the UE while ensuring the PRACH coverage.

In some embodiments, the sending module 710 is further configured to: send a threshold P of a numeric count of PRACH transmissions to the UE.

With the power ramping determination apparatus of the disclosure, the network device sends the threshold P of the numeric count of PRACH transmissions to the UE, the UE determine a numeric count p of PRACH transmissions in a case a third event occurs for the plurality of PRACH transmissions, and determine whether to perform the power ramping based on a relationship between P and p, in which the third event is a transmission power of a PRACH transmission is reduced or a PRACH transmission is cancelled due to a power allocation, which clarifies how the UE performs the power ramping when power allocation causes transmission power reduction of one or more PRACH transmissions and/or a cancellation of one or more PRACH transmissions among the plurality of PRACH transmissions.

The disclosure also provides a communication system, which is applied to a core network. The communication system may be a long term evolution (LTE) system, a 5G mobile communication system, a 5G new radio (NR) system, or other new future mobile communication systems.

The communication system includes a network device and a UE.

The UE is configured to implement the method of any one of the embodiments shown in FIGs. 1- 3 above.

The network device is configured to implement the method in the embodiment of FIG. 4.

In conclusion, with the communication system of the embodiments of the disclosure, for the plurality of PRACH transmissions within one RACH attempt, the UE determines whether to perform the power ramping based on the configuration information of the network device or based on the protocol. The disclosure proposes a power ramping mechanism for the plurality of PRACH transmissions, which clarifies the behavior of the UE while ensuring the PRACH coverage.

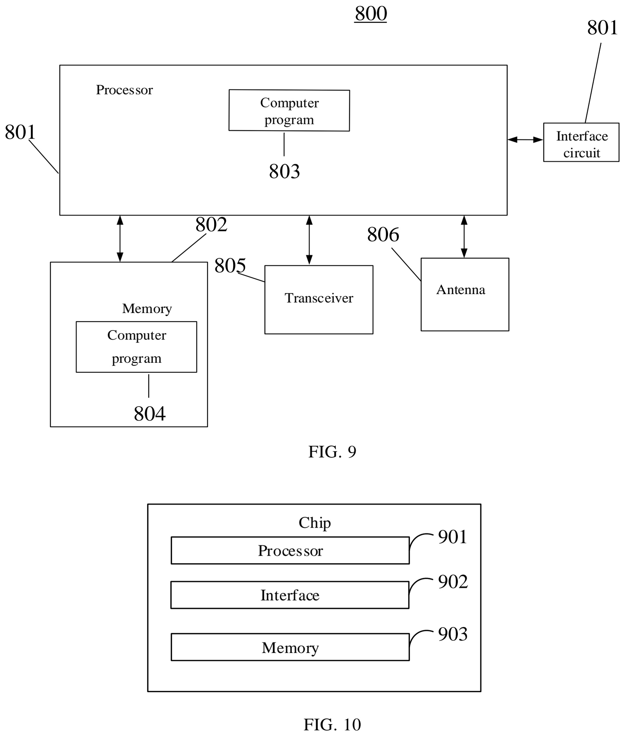

FIG. 9 is a schematic structural diagram of a communication device 800 provided by an embodiment of the disclosure. The communication device 800 may be a network device, a UE, or a chip, a chip system or a processor that supports the network device to realize the above methods, or a chip, a chip system or a processor that supports the UE to realize the above methods. The device is used to implement the methods described in the above method embodiments with reference to the descriptions of the above method embodiments.

The communication device 800 may include one or more processors 801. The processor 801 may be a general purpose processor or a dedicated processor, such as, a baseband processor or a central processor. The baseband processor is used for processing communication protocols and communication data. The central processor is used for controlling the communication device (e.g., base station, baseband chip, UE, UE chip, distributed unit (DU) or central unit (CU)), executing computer programs, and processing data of the computer programs.

In an embodiment of the disclosure, the communication device 800 includes one or more memories 802 on which a computer program 804 is stored. When the processor 801 executes the computer program 804, the communication device 800 is caused to perform the methods described in the above method embodiments. In an embodiment of the disclosure, the memory 802 may also be used to store data. The communication device 800 and the memory 802 may be provided separately or may be integrated together.

In an embodiment of the disclosure, the communication device 800 may also include a transceiver 805 and an antenna 806. The transceiver 805 may be referred to as transceiver unit, transceiver machine or transceiver circuit, for realizing a transceiver function. The transceiver 805 may include a receiver and a transmitter. The receiver may be referred to as receiver machine or receiving circuit, for realizing a receiving function. The transmitter may be referred to as transmitter machine or transmitting circuit, for realizing a transmitting function.

In an embodiment of the disclosure, the communication device 800 may also include one or more interface circuits 807. The interface circuits 807 are used to receive code instructions and transmit the code instructions to the processor 801. The processor 801 runs the code instructions to cause the communication device 800 to implement the methods described in the method embodiments.

In an implementation, the processor 801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 801 may store a computer program 803, which is used to cause the communication device 800 to implement the methods described in the above method embodiments when being executed by the processor 801. The computer program 803 may be solidified in the processor 801, in which case the processor 801 may be implemented by hardware.

In an implementation, the communication device 800 may include circuits. The circuits are used to implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a network device or a UE, but the scope of the communication device described in the disclosure is not limited thereto, and the structure of the communication device is not limited by FIG. 9. The communication device may be a stand-alone device or may be part of a larger device. For example, the communication device may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that can be embedded within other devices;
(5) receivers, UEs, smart UEs, cellular phones, wireless devices, handheld machines, mobile units, in-vehicle devices, network devices, cloud devices, artificial intelligence devices, and the like; and
(6) others.

The case that the communication device is a chip or a chip system can refer to the schematic structural diagram of a chip shown in FIG. 10. The chip shown in FIG. 10 includes a processor 901 and an interface 902. There may be one or more processors 901, and there may be a plurality of interfaces 902.

In an embodiment of the disclosure, the chip also includes a memory 903 for storing necessary computer programs and data.

The disclosure also provides a computer storage medium. The computer storage medium stores computer executable instructions, which are used to implement the functions of any of the above method embodiments when being executed by the processor.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four, or more, which is not limited in the disclosure. In the embodiments of the disclosure, for a type of technical features, "first", "second" and "third", and "A", "B", "C" and "D" are used to distinguish different technical features of the type, the technical features described using "first", "second" and "third", and "A", "B", "C" and "D" do not indicate any order of precedence or magnitude.

As used herein, the terms "machine-readable medium" and "computer-readable medium" refer to any computer program product, device, and/or apparatus (e.g., a disk, a compact disc read-only memory (CD-ROM), a memory, a programmable logic device (PLD)) used to provide machine instructions and/or data to a programmable processor, including machine-readable medium that receives machine instructions as machine-readable signals. The term "machine-readable signal" refers to any signal used to provide machine instructions and/or data to the programmable processor.

The systems and technologies described herein can be implemented in a computing system that includes back-end components (for example, a data server), or a computing system that includes middleware components (for example, an application server), or a computing system that includes front-end components (for example, a user computer with a graphical user interface or a web browser, through which the user can interact with the implementations of the systems and technologies described herein), or a computing system that includes any combination of such back-end components, middleware components, and front-end components. The components of the system may be interconnected by any form or medium of digital data communication (e.g., a communication network). The communication network may include, for example, a local area network (LAN), a wide area network (WAN), and the Internet.

The computer system may include a client and a server. The client and the server are generally remote from each other and interacting through a communication network. The client-server relation is generated by computer programs running on the respective computers and having a client-server relation with each other.

It is understandable that the steps can be reordered, added or deleted using various forms of the processes shown above. For example, the steps in the disclosure may be performed in parallel, sequentially or in different orders, as long as the desired results of the technical solutions disclosed in the disclosure are achieved, which are not limited herein.

In addition, it should be understood that the embodiments of the disclosure may be implemented separately or in combination with other embodiments if the solution permits.

The embodiments or implementations of the disclosure are not exhaustive, and they are merely illustrations of some implementations or examples and are not intended to limit the scope of protection of the disclosure. Without contradiction, each step in an embodiment or an implementation can be implemented as an independent embodiment, and the steps can be combined arbitrarily. For example, a solution after deleting some steps in an embodiment or an implementation can also be implemented as an independent embodiment, and the order of steps in an embodiment or an implementation can be exchanged arbitrarily. In addition, optional examples or modes in an embodiment or an implementation can be combined arbitrarily. Moreover, the various embodiments or implementations can also be combined arbitrarily. For example, some steps or all the steps of different embodiments or implementations can be combined arbitrarily, and an embodiment or an implementation can be combined arbitrarily with other optional modes or examples of other embodiments or implementations.

In some implementations or embodiments, the terms "in response to", "in a case that" "when", "while", "if" etc. in the disclosure may be used interchangeably.

In some embodiments or implementations, depending on the situation, "A or B", "A and/or B", "at least one of A and B", "at least one of A or B", "A in one case, B in another case", "in response to one case, A, and in response to another case, B", etc., may be used to describe at least one of the following technical solutions: executing A independently of B, i.e., only executing A in some embodiments or implementations; executing B independently of A, i.e., only executing B in some embodiments or implementations; selectively executing A and B, i.e., selecting A or B to execute in some embodiments or implementations; and executing both A and B, i.e., executing A and B in some embodiments or implementations. The above examples are also applicable for similar cases with more branches, e.g., a combination of A, B and C.

In some embodiments or implementations, "including A," "comprising A," "used to indicate A," and "carrying A" in the disclosure may be interpreted as directly carrying A or implicitly indicating A.

In all implementations or embodiments of the disclosure, the terms "first", "second", "third", etc., do not indicate an order, but are only used to distinguish different features.

In addition, each element, each row or each column in the tables involved in the disclosure can be implemented as an independent embodiment, and any combination of the elements, the rows and the columns can also be implemented as an independent embodiment.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference may be made to the corresponding processes in the above method embodiments, and details will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A power ramping determination method, performed by a user equipment (UE), comprising:
for a plurality of physical random access channel (PRACH) transmissions within one random access channel (RACH) attempt, determining whether to perform power ramping based on configuration information of a network device or based on a protocol.

2. The method of claim 1, further comprising:
receiving the configuration information sent by the network device;
wherein the configuration information indicates whether the UE performs the power ramping or not.

3. The method of claim 1 or 2, wherein determining whether to perform the power ramping based on the configuration information of the network device comprises:
in response to receiving the configuration information or in response to receiving the configuration information carrying information indicating the UE to perform the power ramping, determining to perform the power ramping; or
in response to not receiving the configuration information or in response to receiving the configuration information carrying information indicating the UE not to perform the power ramping, determining not to perform the power ramping.

4. The method of any one of claims 1-3, wherein determining whether to perform the power ramping based on the protocol comprises:
in a case that a first event agreed in the protocol occurs, determining to perform the power ramping;
wherein the first event is: for the plurality of PRACH transmissions, less than or equal to m PRACH transmissions are reduced in transmission power or cancelled due to a power allocation, m is less than a numeric count n of transmissions for the plurality of PRACH transmissions determined by the UE, and m is agreed in the protocol.

5. The method of claim 4, further comprising:
receiving a candidate numeric count of transmissions for the plurality of PRACH transmissions sent by the network device; and
determining the numeric count n based on the candidate numeric count of transmissions.

6. The method of any one of claims 1-3, wherein determining whether to perform the power ramping based on the protocol comprises:
in a case that a second event agreed in the protocol occurs, determining not to perform the power ramping;
wherein the second event is: for the plurality of PRACH transmissions, at least one PRACH transmission is reduced in transmission power or cancelled due to a power allocation.

7. The method of any one of claims 1-6, wherein determining whether to perform the power ramping based on the configuration information of the network device or based on the protocol comprises:
determining a threshold P of a numeric count of PRACH transmissions based on the configuration information of the network device or based on the protocol;
determining a numeric count p of PRACH transmissions in a case a third event occurs for the plurality of PRACH transmissions;
determining whether to perform the power ramping based on a relationship between P and the p;
wherein the third event is a transmission power of a PRACH transmission is reduced or a PRACH transmission is cancelled due to a power allocation.

8. The method of claim 7, wherein determining whether to perform the power ramping based on the relationship between P and p comprises:
in a case p≤P, determining to perform the power ramping; or
in a case p> P, determining not to perform the power ramping.

9. The method of claim 7, wherein P comprises a threshold Q of a numeric count of reducing the transmission power and a threshold K of a numeric count of cancelling the PRACH transmission, p comprises a numeric count q of PRACH transmissions with reduced transmission power due to the power allocation for the plurality of PRACH transmissions and a numeric count k of PRACH transmissions cancelled due to the power allocation for the plurality of PRACH transmissions, and determining whether to perform the power ramping based on the relationship between p and P comprises:
in a case k≤K and q≤Q, determining to perform the power ramping; or
in a case k >K or q >Q, determining not to perform the power ramping.

10. The method of claim 9, wherein determining whether to perform the power ramping based on the relationship between P and p comprises:
in a case p≤P, q≤Q and k≤K, determining to perform the power ramping; or
in a case any one of p>P, q>Q and k>K holds, determining not to perform the power ramping.

11. A power ramping determination method, performed by a network device, comprising:
sending configuration information to a user equipment (UE);
wherein the configuration information indicates whether the UE performs the power ramping or not.

12. The method of claim 11, further comprising:
sending a candidate numeric count of transmissions for a plurality of physical random access channel (PRACH) transmissions,
wherein the candidate numeric count of the transmissions is used for assisting the UE to determine a numeric count n of transmissions for the plurality of PRACH transmissions.

13. The method of claim 11 or 12, further comprising:
sending a threshold P of a numeric count of PRACH transmissions to the UE.

14. A user equipment (UE), comprising:
a determining module, configured to, for a plurality of physical random access channel (PRACH) transmissions within one random access channel (RACH) attempt, determine whether to perform power ramping based on configuration information of a network device or based on a protocol.

15. A network device, comprising:
a sending module, configured to send configuration information to a user equipment (UE),
wherein the configuration information indicates whether the UE performs the power ramping or not.

16. A communication device, comprising: a transceiver, a memory, and a processor connected to the transceiver and the memory, respectively, wherein the processor is configured to control the transceiver to receive and transmit wireless signals by executing computer-executable instructions on the memory, and is capable of implementing the method of any one of claims 1-13.

17. A computer storage medium, wherein the computer storage medium stores computer executable instructions, when executed by a processor, the computer executable instructions are capable of implementing the method of any one of claims 1-13.

18. A communication system comprising a user equipment (UE) and a network device, wherein the UE is used to implement the method according to any one of claims 1-10; and the network device is used to implement the method according to any one of claims 11-13.
